# EUROPEAN PATENT APPLICATION

(11) **EP 2 719 278 A1**
(43) Date of publication of application: **16.04.2014**
(21) Application number: 12189752.4
(22) Date of filing: 24.10.2012
(51) Int. Cl.: A01K 97/10

(54) **Fishing rod or pole support system**

(30) Priority: 11.10.2012 GB 201218267
(71) Applicant: Calvert, Kevin, Sheffield South Yorkshire S12 4QR (GB)
(72) Inventor: Calvert, Kevin, Sheffield South Yorkshire S12 4QR (GB)

(57) **Abstract**

A fishing rod or pole support system, comprising a deformable strip member 1 and at least two belt sets 2a, each of them being either closeable or sealable, for fixing the strip member to the legs. The deformable strip member 1 may include a central part 3, two side parts 4a, 4b and two tunnels 5a, 5b made in the lines where the central part and the side parts border. The fishing rod or pole support system may further comprise two rods 6a, 6b, each of them positioned, along at least a part of its length, inside one of one of the tunnels, whereby the rods are connected with a strip 7.

## Description

### Field of the Invention

The present invention relates to a fishing rod or pole support system. Specifically, the invention relates to a portable hands-free fishing rod or pole support system.

### Background of the Invention

Over the years, various types of devices have been proposed, such as waist belts and other padded abdominal devices or arm supporters for a fishing rod or pole. Waist belts do not add any horizontal support. As pressure is increased, a rod typically wants to buckle left or right, placing added strain on the fisherman's arms. Adding a harness to the waist belt helps to remove the pressure form the arms but transfers the pressure to the back. Then drop straps need to be added to lower the waist belt to reduce strain and pressure and increase leverage.

WO2006/014042 discloses an arm supporter for a fishing rod, which supports the angler's arm holding the fishing rod by being fixed to the handgrip of the fishing rod.

The present invention overcomes these problems by moving the weight from the upper part of the body to legs. In addition to this, the present invention relates to a hands-free fishing rod or pole support system.

### Summary of the Invention

Problems with prior art include that these devices all apply some degree of discomfort onto trunk, particularly on the abdomen. None move the leverage point from the upper part of the body to legs.

According to the first aspect of the present invention, there is provided a fishing rod or pole support system comprising a deformable strip member and at least two belt sets, each of them being either closeable or sealable, for fixing the deformable strip member to legs.

According to the first aspect of the present invention, there is provided a fishing rod or pole support system comprising a deformable strip member and at least two belt sets, each of them being either closeable or sealable, for fixing the deformable strip member to legs, wherein the deformable strip member comprises a central part and two side parts.

According to another aspect of the present invention, there is provided a fishing rod or pole support system comprising a deformable strip member comprising a central part and two side parts; at least two belt sets, each of them being either closeable or sealable, and two tunnels made in the lines where the central part and the side parts border.

According to another aspect of the present invention, there is provided a fishing rod or pole support system comprising a deformable strip member comprising a central part and two side parts; at least two belt sets, each of them being either closeable or sealable; two tunnels made in the lines where the central part and the side parts border, and two rods, each of them positioned, along at least a part of its length, inside one of the tunnels, whereby the rod coming out from the first tunnel is connected with the rod coming out from the second tunnel with a strip, whereby the strip connects the two rods at the end part which is opposite to the end part which is positioned in the tunnels.

Embodiments described herein may have an advantage that in case the river, pool, sea or any other place, where the fish potentially is, is more distant, and there is a need of a longer fishing rod or pole, the fishing rod or pole support system comprises, as described above, two rods, each of them positioned, along at least a part of its length, inside one of the tunnels, and whereby the rod coming out from the first tunnel is connected with the rod coming out from the second tunnel with a strip, whereby the strip connects the two rods at the end part which is opposite to the end part which is positioned in the tunnels.

Embodiments described herein may have another advantage that the fishing rod or pole support system is easy to be made and its construction is not associated with any mechanisms, tools or equipment. It is relatively cheap to purchase and is light and easy to carry and assemble.

Another advantage is that the fishing rod or pole support system according to the present invention is hands-free and does not apply discomfort onto trunk.

Another advantage is that the system is particularly useful for users who find it hard to hold the weight of the rod or pole, including children, elderly users and users with disabilities.

Another advantage is that it is possible to throw the bait in, and "strike" with small leg movement if a fish bites, without touching the rod or pole or the fishing rod or pole support system with hands.

Embodiments described herein may have another advantage that the fishing rod or pole support system can be used from a fishing chair, a basic seat box, a wheelchair or even when one sits on the floor or ground.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates a fishing rod or pole support system with a deformable strip member and two closeable belt sets.
Figure 2 illustrates a fishing rod or pole support system with a deformable strip member and two sealable belt sets.
Figure 3 illustrates a fishing rod or pole support system where a deformable strip member includes three parts, whereby the side parts are provided with closeable or sealable belt sets.
Figure 4 illustrates a fishing rod or pole support system where a deformable strip member includes three parts, whereby the side parts are provided with closeable or sealable belt sets. The system further comprises two tunnels and two connected rods.
Figure 5 illustrates a fishing rod or pole support system comprising a deformable strip member and two closeable belt sets for fixing the strip member to the legs of a fisherman sitting on a chair. The system is fixed to the legs of a fisherman sitting on a chair.
Figure 6 illustrates a fishing rod or pole support system comprising a deformable strip member with a closeable belt set and a sealable belt set and two tunnels. The system is fixed to the legs of a fisherman sitting on a chair.
Figure 7 illustrates a fishing rod or pole support system comprising a deformable strip member with a closeable belt set and a sealable belt set, two tunnels and two connected rods. The system is fixed to the legs of a fisherman sitting on a chair.
Figure 8 illustrates a fishing rod or pole support system comprising a deformable strip member with two closeable belt sets for fixing the strip member to the legs of a fisherman sitting on a wheelchair. The system is fixed to the legs of a fisherman sitting on a wheelchair.
Figure 9 illustrates a fishing rod or pole support system comprising a deformable strip member with two closeable belt sets and two sealable belt sets, for fixing the strip member to the legs of a fisherman sitting on a wheelchair, two tunnels and two connected rods. The system is fixed to the legs of a fisherman sitting on a wheelchair.
Figure 10 illustrates a fishing rod or pole support system comprising a deformable strip member with two closeable belt sets for fixing the strip member to the legs of a fisherman sitting on the ground. The system is fixed to the legs of a fisherman sitting on the ground.
Figure 11 illustrates a fishing rod or pole support system comprising a deformable strip member, two sealable belt sets for fixing the strip member to the legs of a fisherman sitting on the ground, two tunnels and two connected rods. The system is fixed to the legs of a fisherman sitting on the ground.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

There will now be described several different embodiments and variations of a fishing rod or pole support system.

In this specification, the term "belt set" is used to describe a set comprising at least one belt.

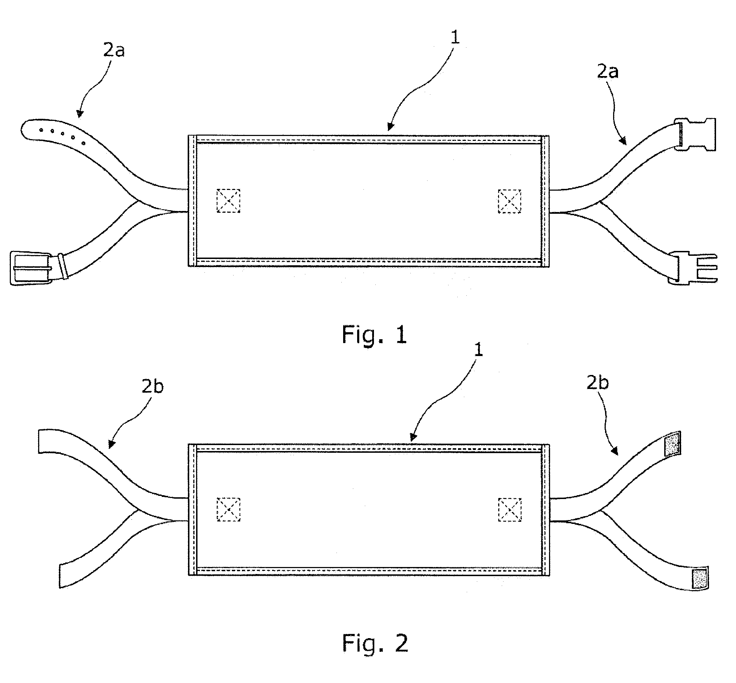

In this specification, sad belt set can be closeable or sealable as depicted in Figs 1-10 or in any other way known in the art.

At Figure 1, there is shown a fishing rod or pole support system. The fishing rod or pole support system comprises a deformable strip member(1) and two closeable belt sets (2a) for fixing the strip member to legs of a fisherman.

At Figure 2, there is shown a fishing rod or pole support system. The fishing rod or pole support system comprises a deformable strip member(1) and two sealable belt sets (2b) for fixing the strip member to legs of a fisherman.

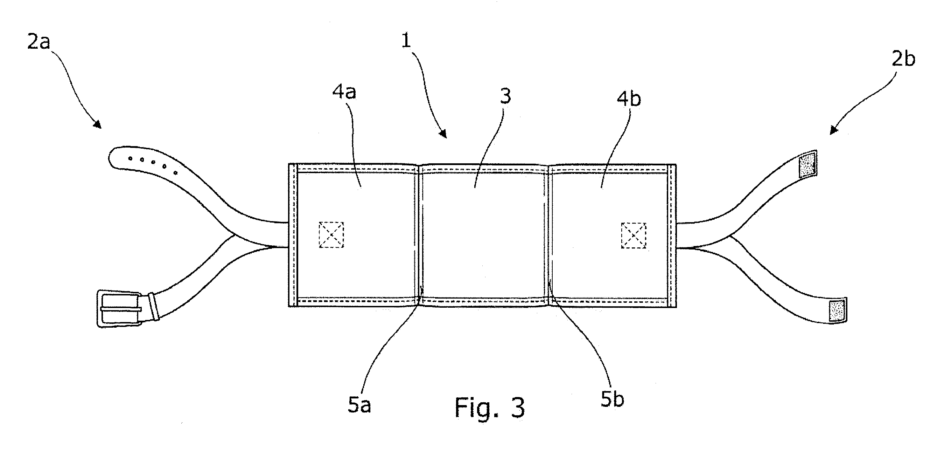

At Figure 3 it is shown a fishing rod or pole support system. The fishing rod or pole support system comprises a deformable strip member (1) including a central part (3), two side parts(4a,4b), provided with a closeable belt set(2a) and a sealable belt set(2b) and two tunnels (5a,5b) made in the lines where the central part (3) and the side parts (4a,4b) border.

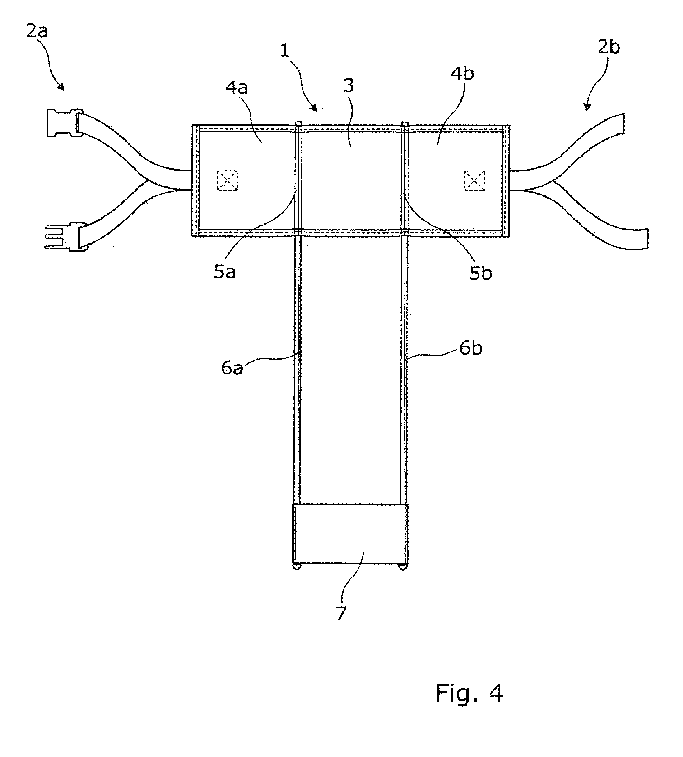

At Figure 4 it is shown a fishing rod or pole support system. The fishing rod or pole support system comprises a deformable strip member (1) including a central part(3), two side parts(4a,4b), provided with a closeable belt set(2a) and a sealable belt set(2b) and two tunnels(5a,5b) made in the lines where the central part(3) and the side parts(4a,4b) border and two rods (6a,6b), each of them positioned, along at least a part of its length, inside one of the tunnels(5a,5b), whereby the rod coming out from the first tunnel is connected with the rod coming out from the second tunnel with a strip(7) whereby the strip connects the two rods at the end part which is opposite to the end part which is positioned in the tunnels.

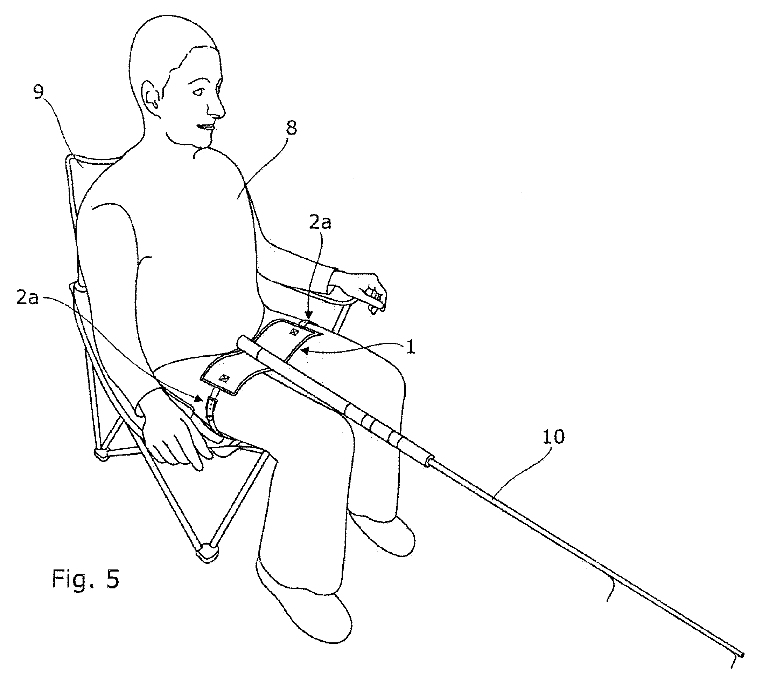

At figure 5 it is shown a fishing rod or pole support system. The fishing rod or pole support system comprises a deformable strip member(1) and two closeable belt sets (2a) for fixing the strip member to the legs of a fisherman (8) sitting on a chair(9). The system is fixed with the closeable belt sets(2a) to the legs of a fisherman(8) sitting on a chair (9). The fishing rod or pole (10) is positioned on the support system along at least a part of its length. It is possible to "strike" with small leg movement if a fish bites, without touching the rod or pole or the fishing rod or pole support system with hands.

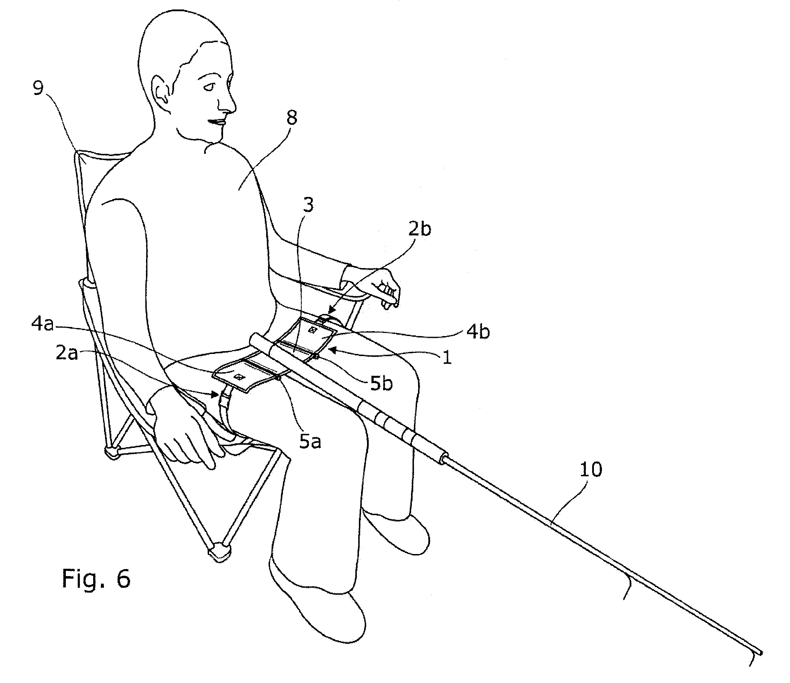

At figure 6 it is shown a fishing rod or pole support system wherein the system comprises a deformable strip member(1) including a central part(3), two side parts(4a,4b), provided with a closeable belt set (2a) and a sealable belt set (2b) and two tunnels(5a,5b) made in the lines where the central part(3) and the side parts(4a,4b) border. The system is fixed with the closeable and sealable belt sets to the legs of a fisherman (8) sitting on a chair (9). The fishing rod or pole (10) is positioned on the support system along at least a part of its length. It is possible to "strike" with small leg movement if a fish bites, without touching the rod or pole or the fishing rod or pole support system with hands.

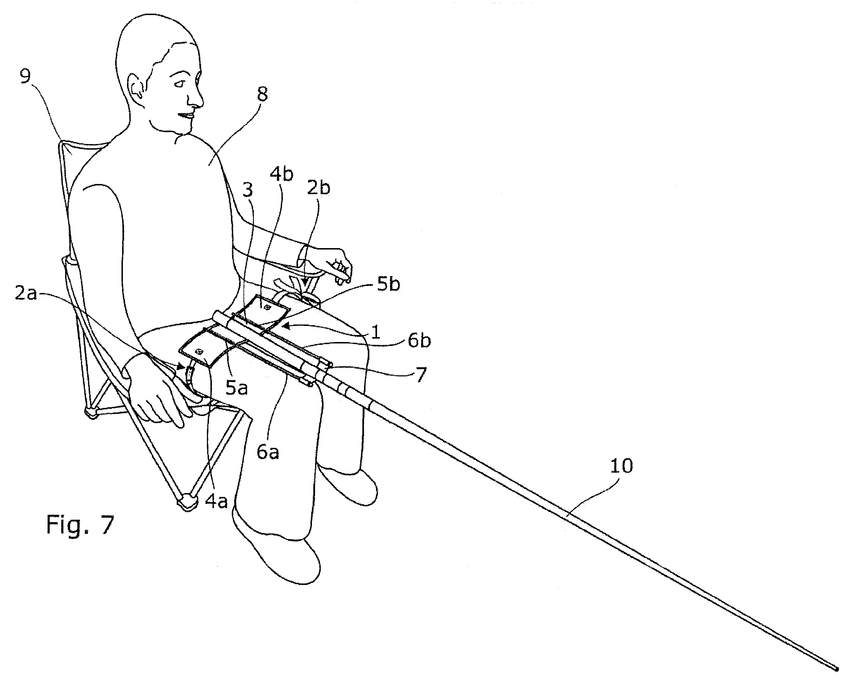

At figure 7 it is shown a fishing rod or pole support system wherein the system comprises a deformable strip member(1) including a central part(3), two side parts(4a,4b) provided with a closeable belt set(2a) and a sealable belt set (2b), two tunnels(5a,5b) made in the lines where the central part(3) and the side parts(4a,4b) border and two rods (6a,6b), each of them positioned, along at least a part of its length, inside one of the tunnels(5a,5b), whereby the rod coming out from the first tunnel is connected with the rod coming out from the second tunnel with a strip(7) whereby the strip connects the two rods at the end part which is opposite to the end part which is positioned in the tunnels. The system is fixed to the legs of a fisherman (8) sitting on a chair(9) with the closeable belt set(2a) and the sealable belt set (2b). The fishing rod or pole (10) is positioned on the support system along at least a part of its length. It is possible to "strike" with small leg movement if a fish bites, without touching the rod or pole or the fishing rod or pole support system with hands.

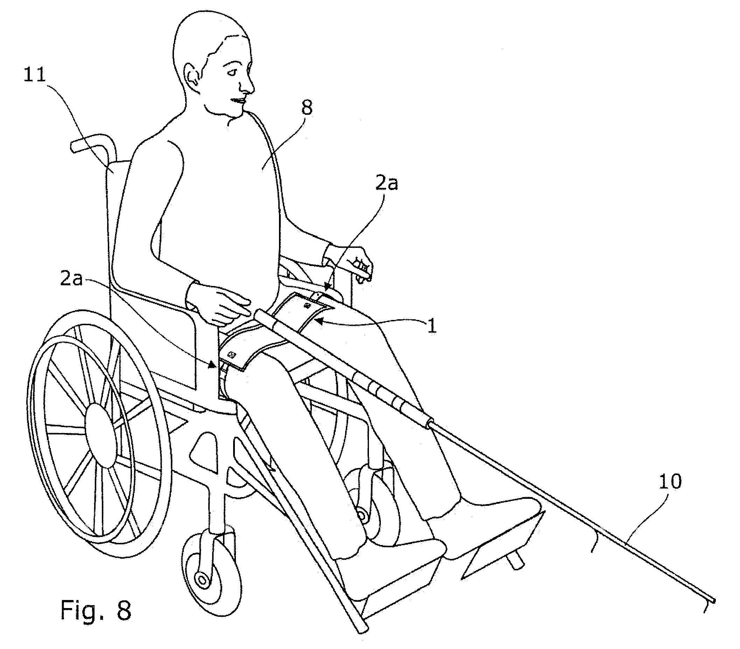

At figure 8 it is shown a fishing rod or pole support system. The fishing rod or pole support system comprises a deformable strip member(1) and two closeable belt sets (2a) for fixing the strip member to the legs of a fisherman (8) sitting on a wheelchair(11).The system is fixed with the closeable belt sets (2a) to the legs of a fisherman(8) sitting on a wheelchair (11). The fishing rod or pole (10) is positioned on the support system along at least a part of its length. It is possible to "strike" with small leg movement if a fish bites, without touching the rod or pole or the fishing rod or pole support system with hands.

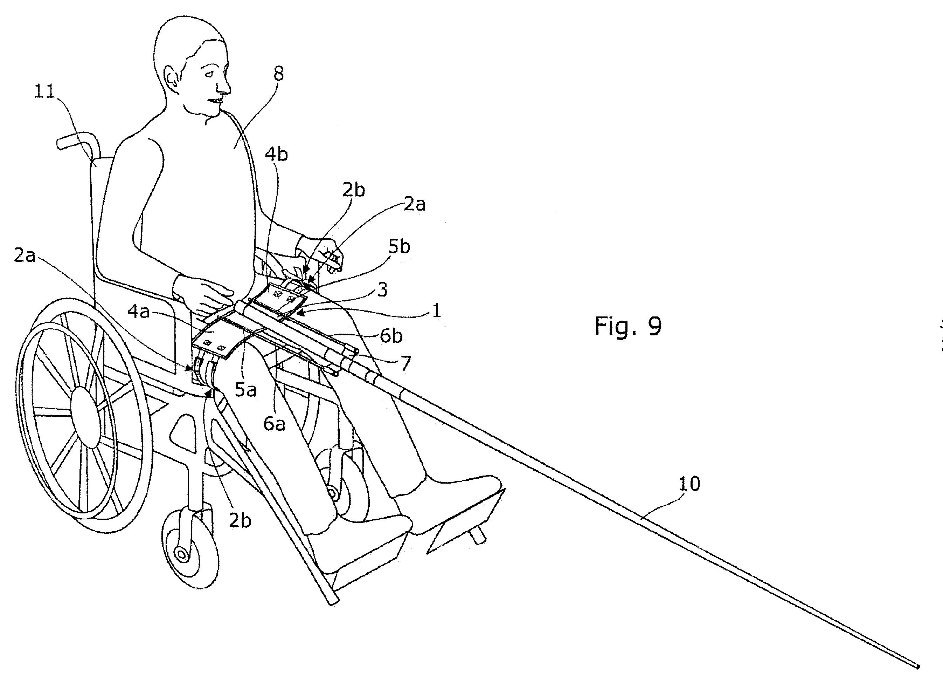

At figure 9 it is shown a fishing rod or pole support system wherein the system comprises a deformable strip member(1) including a central part(3), two side parts(4a,4b), each of them provided with a closeable belt set (2a) and a sealable belt set(2b), two tunnels (5a,5b) made in the lines where the central part(3) and the side parts(4a,4b) border and two rods (6a,6b), each of them positioned, along at least a part of its length, inside one of the tunnels(5a,5b), whereby the rod coming out from the first tunnel is connected with the rod coming out from the second tunnel with a strip(7) whereby the strip connects the two rods at the end part which is opposite to the end part which is positioned in the tunnels. The system is fixed to the legs of a fisherman (8) sitting on a wheelchair(11) with the closeable belt sets(2a) and the sealable belt sets(2b). The fishing rod or pole (10) is positioned on the support system along at least a part of its length. It is possible to "strike" with small leg movement if a fish bites, without touching the rod or pole or the fishing rod or pole support system with hands.

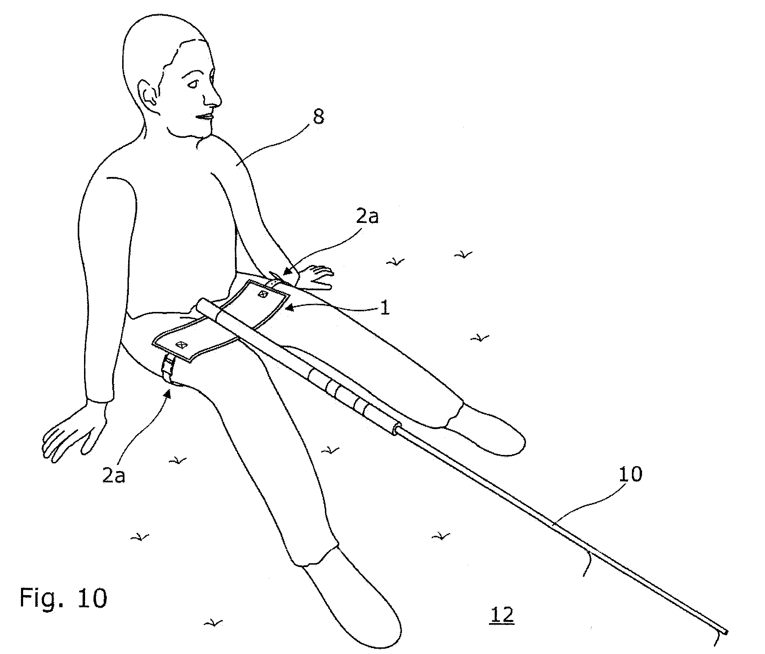

At figure 10 it is shown a fishing rod or pole support system. The fishing rod or pole support system comprises a deformable strip member(1) and two closeable belt sets (2a) for fixing the strip member to the legs of a fisherman (8) sitting on the ground (12). The system is fixed with the closeable belt sets (2a) to the legs of a fisherman (8) sitting on the ground (12). The fishing rod or pole (10) is positioned on the support system along at least a part of its length. It is possible to "strike" with small leg movement if a fish bites, without touching the rod or pole or the fishing rod or pole support system with hands.

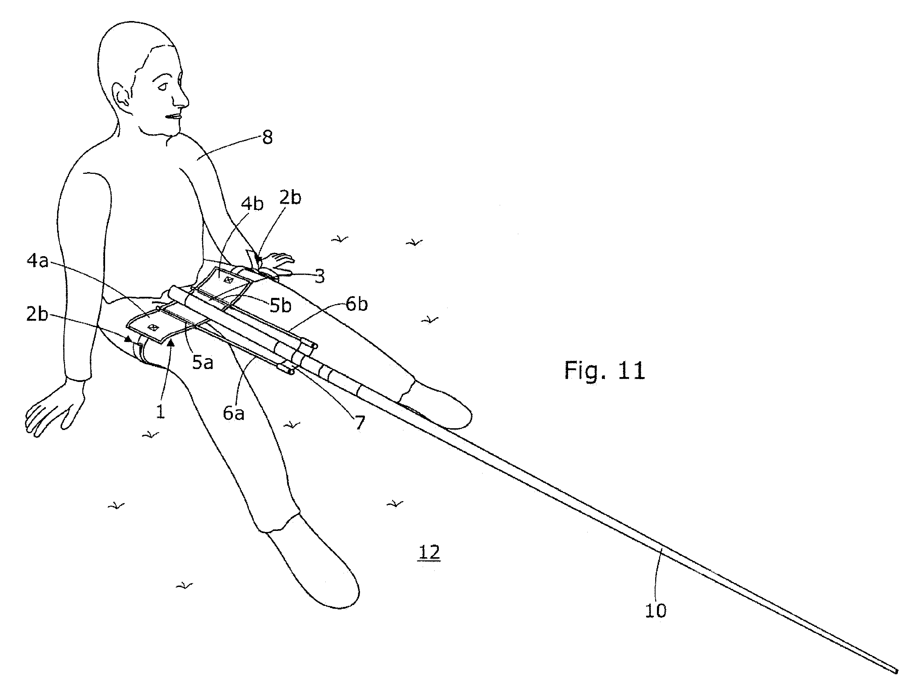

At Figure 11 it is shown a fishing rod or pole support system wherein the system comprises a deformable strip member (1) including a central part(3), two side parts(4a,4b), each of them provided with a sealable belt set (2b) and two tunnels(5a,5b) made in the lines where the central part(3) and the side parts(4a,4b) border and two rods (6a,6b), each of them positioned, along at least a part of its length, inside one of the tunnels(5a,5b), whereby the rod coming out from the first tunnel is connected with the rod coming out from the second tunnel with a strip(7) whereby the strip connects the two rods at the end part which is opposite to the end part which is positioned in the tunnels. The support system is fixed to the legs of a fisherman (8) sitting on the ground (12) with two sealable belt sets (2b). The fishing rod or pole (10) is positioned on the support system along at least a part of its length. It is possible to "strike" with small leg movement if a fish bites, without touching the rod or pole or the fishing rod or pole support system with hands.

The material from which said deformable strip member (1) is made is flexible. Material known in the art may be used, such as nylon, rubber or gantex.

The material from which said strip (7) or said belt set(2a, 2b) are made is flexible. Material known in the art may be used, such as nylon or leather.

The material from which said rods (6a,6b) are made is stiff and at the same time flexible. Material known in the art may be used, such as metal, resin, timber or a combination of plastic with fiberglass.

## Claims

1. A fishing rod or pole support system comprising:
a deformable strip member and at least two belt sets, each of them being either closeable or sealable, for fixing the deformable strip member to legs.

2. A fishing rod or pole support system according to claim 1, wherein the deformable strip member comprises a central part and two side parts.

3. A fishing rod or pole support system according to claim 2, further comprising two tunnels made in the lines where the central part are the side parts border.

4. A fishing rod or pole support system according to claim 3, further comprising two rods, each of them positioned, along at least a part of its length, inside one of one of the tunnels, whereby the rod coming out from the first tunnel is connected with the rod coming out from the second tunnel with a strip, whereby the strip connects the two rods at the end part which is opposite to the end part which is positioned in the tunnels.

## Amended claims

### Amended claims in accordance with Rule 137(2) EPC.

**1.** A fishing rod or pole support system comprising :
a deformable strip member (1) and at least two belt sets, each of them being either closeable or sealable, for fixing the deformable strip member to legs, wherein the deformable strip member (1) comprises a central part (3) and two side parts (4a, 4b), two tunnels (5a, 5b) made in the lines where the central part are the side parts border, **characterized in that** the fishing rod or pole support system comprises two rods (6a, 6b), each of them positioned, along at least a part of its length, inside one of one of the tunnels, whereby the rod coming out from the first tunnel is connected with the rod coming out from the second tunnel with a strip (7), whereby the strip connects the two rods at the end part which is opposite to the end part which is positioned in the tunnels.
